# EUROPÄISCHE PATENTSCHRIFT

(11) **EP 3 266 685 B1**
(45) Veröffentlichungstag und Bekanntmachung des Hinweises auf die Patenterteilung: **11.09.2019**
(21) Anmeldenummer: 17180196.2
(22) Anmeldetag: 07.07.2017
(51) Int. Cl.: B62D 25/02, B62D 25/06, B62D 63/02

(54) **KAROSSERIESTRUKTUR FÜR EIN NUTZFAHRZEUG**
STRUCTURE FOR A COMMERCIAL VEHICLE
STRUCTURE DE CARROSSERIE POUR UN VÉHICULE UTILITAIRE

(30) Priorität: 07.07.2016 DE 102016212371
(43) Veröffentlichungstag der Anmeldung: 10.01.2018
(73) Patentinhaber: VOLKSWAGEN AKTIENGESELLSCHAFT, 38440 Wolfsburg (DE)
(72) Erfinder: Pilz, Alexander, 38518 Gifhorn (DE); Belovizkij, Nelli, 38518 Gifhorn (DE)

(56) Entgegenhaltungen:
- EP-A1- 1 153 819
- DE-A1-102013 219 317
- GB-A- 2 204 284
- US-A1- 2004 212 222

## Beschreibung

Die Erfindung betrifft eine Karosseriestruktur für ein Nutzfahrzeug nach dem Oberbegriff des Patentanspruches 1 sowie eine Fahrzeuggruppe nach dem Patentanspruch 9 und ein Verfahren zur Herstellung von Fahrzeugen unterschiedlicher Fahrzeugvarianten nach dem Patentanspruch 10.

Ein solches Nutzfahrzeug kann im Fahrzeugdach seitliche, in der Fahrzeuglängsrichtung verlaufende Dachkanäle aufweisen. Die Dachkanal-Position kann bei unterschiedlichen Fahrzeugvarianten in der Fahrzeugquerrichtung variieren. Beispielhaft kann in einer ersten Fahrzeugvariante mit reduzierter Dachhöhe die Dachkanal-Position weiter fahrzeuginnen sein als bei einer zweiten Fahrzeugvariante mit größerer Dachhöhe, bei der die Dachkanal-Position weiter nach fahrzeugaußen verlagert ist.

In einer gattungsgemäßen Karosseriestruktur weist das Fahrzeugdach eine Dach-Außenhaut auf, die in der Fahrzeugquerrichtung nach fahrzeugaußen an eine Seiten-Außenhaut angebunden ist. Die Dach-Außenhaut und die Seiten-Außenhaut weisen jeweils vordere Querflansche auf, die einen gemeinsamen Frontscheibenflansch zur Auflage der Fahrzeug-Frontscheibe bilden. Die beiden Querflansche der Dach-Außenhaut und der Seiten-Außenhaut sind in der Fahrzeugquerrichtung hintereinander angeordnet und an einer ersten dreilagigen Anbindungsstelle (Schweißstelle) überlappend in Verbindung sowie auf einem Querträger-Flansch eines Querträgerprofils abgestützt. Zusätzlich laufen an der ersten dreilagigen Anbindungsstelle die Querflansche der Dach- und Seiten-Außenhaut jeweils mit deren Längsflansche zusammen. Die Längsflansche der Dach- und Seiten-Außenhaut sind unter Bildung des Dachkanals ebenfalls miteinander verbunden.

Das oben erwähnte Querträgerprofil ist im gattungsgemäßen Stand der Technik nicht einteilig ausgeführt, sondern aus einem Querträger-Mittelteil und zumindest einem Querträger-Konsolenteil aufgebaut, das am Karosserie-Seitenteil angebunden ist. Das Querträger-Mittelteil und das Querträger-Konsolenteil liegen an einer zweiten dreilagigen Anbindungsstelle, insbesondere Schweißstelle, überlappend übereinander und sind mit einem der vorderen Querflansche der Dach- und der Seiten-Außenhaut verbunden. Die Verbindung zwischen dem Querträger-Mittelteil und dem Querträger-Konsolenteil ist so breit doppellagig ausgeführt, dass eine stabile, doppelreihige Fügeverbindung realisiert werden kann.

Bei der Realisierung unterschiedlicher Fahrzeugvarianten besteht die Problematik, dass gegebenenfalls die Position der ersten dreilagigen Anbindungsstelle (zwischen den Querflanschen der Dach- und Seiten-Außenhaut) und die Position der zweiten dreilagigen Anbindungsstelle (zwischen dem Querträger-Mittelteil und dem Querträger-Konsolenteil) in der Fahrzeughochrichtung fluchtend übereinander liegen. Dies führt bei der oben beschriebenen Karosseriestruktur zu einer vierlagigen Anbindungsstelle, die im Hinblick auf eine einwandfreie Punktschweißverbindung nicht prozesssicher verschweißbar ist.

Aus der DE 2014 107 741 A1 ist eine Verbindungsstruktur für einen Dachrahmen eines Kraftfahrzeugs bekannt. Zudem ist aus der EP 1 764 287 A2 eine Karosseriestruktur für ein Kraftfahrzeug bekannt, die eine Karosseriesäule, einen seitlichen Dachkanal sowie eine dreischenklige Knotenverbindung aufweist. Aus der US 2004/212222 A1 ist eine Fahrzeugkarosseriestruktur bekannt. Zudem ist aus der GB 2 204 284 A eine Dachstruktur für eine Fahrzeugkarosserie bekannt. Die EP 1 153 819 A1 beschreibt einen elementären Zusammenbau für eine Kraftfahrzeugkarosserie.

Die Aufgabe der Erfindung besteht darin, eine Karosseriestruktur für ein Nutzfahrzeug, eine Fahrzeuggruppe aus Fahrzeugen unterschiedlicher Fahrzeugvarianten sowie ein Verfahren zur Herstellung von Fahrzeugen unterschiedlicher Fahrzeugvarianten bereitzustellen, bei der im Vergleich zum Stand der Technik fertigungstechnisch einfach sowie mit reduziertem Bauteilaufwand die Karosseriestruktur an die unterschiedlichen Fahrzeugvarianten anpassbar ist.

Die Aufgabe ist durch die Merkmale des Patentanspruches 1, 9 oder 10 gelöst. Bevorzugte Weiterbildungen der Erfindung sind in den Unteransprüchen offenbart.

Die Erfindung beruht auf der Problematik, dass bei heutigem Stand der Technik bei einer vierlagigen Blechteilanordnung eine einwandfreie Schweißverbindung nicht prozesssicher zu realisieren ist. Vor diesem Hintergrund ist gemäß dem kennzeichnenden Teil des Patentanspruches 1 die Position der zweiten dreilagigen Anbindungsstelle (zwischen dem Querträger-Mittelteil und dem Querträger-Konsolenteil) so ausgelegt, dass sowohl in der ersten Fahrzeugvariante als auch in der zweiten Fahrzeugvariante die beiden dreilagigen Anbindungsstellen um Querversätze zueinander beabstandet sind. Auf diese Weise ist über den gesamten Querverlauf des Frontscheibenflansches eine zwei- oder dreilagige Flanschverbindung gewährleistet, d.h. ein Zweilagenaufbau sowie an den beiden Anbindungsstellen jeweils ein Dreilagenaufbau.

Eine Positionierung der beiden ersten und zweiten dreilagigen Anbindungsstellen in Flucht übereinander kann somit zuverlässig verhindert werden. Vielmehr ist an der ersten Anbindungsstelle ein Dreilagenaufbau realisiert, bei dem die beiden Querflansche der Dach-Außenhaut und der Seiten-Außenhaut sowie ein einlagiger Querträger-Flansch des Querträger-Konsolenteils übereinanderliegen. In gleicher Weise ist auch an der zweiten Anbindungsstelle ein Dreilagenaufbau gewährleistet, bei dem die beiden Querträger-Flansche des Querträger-Mittelteils und des Querträger-Konsolenteils sowie der einlagige Querflansch der Dach-Außenhaut übereinanderliegen.

Im Hinblick auf eine Reduzierung des Bauteilaufwands ist es bevorzugt, wenn sowohl in der ersten Fahrzeugvariante als auch in der zweiten Fahrzeugvariante, mit Ausnahme der Dach-Außenhaut und der Seiten-Außenhaut, Gleichteile verbaut sind.

Die Baulänge des Querträger-Konsolenteils ist in der Fahrzeugquerrichtung derart bemessen, dass sowohl in der ersten Fahrzeugvariante als auch in der zweiten Fahrzeugvariante die erste dreilagige Anbindungsstelle um einen ausreichend großen Querversatz von der zweiten dreilagigen Anbindungsstelle beabstandet sind.

Im Zusammenbauzustand ist das Querträger-Konsolenteil unter Bildung eines oberen A-Säulenknotens an einem Dachrahmen-Seitenteil angebunden. Das Dachrahmen-Seitenteil bildet im weiteren Verlauf nach fahrzeugvorne den seitlichen Frontscheibenflansch.

Aufgrund der im Vergleich zum Stand der Technik wesentlich größeren Baulänge in der Fahrzeugquerrichtung kann das Querträger-Konsolenteil in Doppelfunktion Zusatzfunktionen aufweisen. Beispielhaft kann das Querträger-Konsolenteil zusätzliche Lager-Anbindungsstellen aufweisen, an die ein Lager für eine im Fahrzeuginnenraum verbaute Sonnenblende montierbar ist.

Die obige Karosseriestruktur wird in einem nachfolgend beschriebenen Fügevorgang zusammengebaut: So wird zunächst eine Seiten-Baugruppe bereitgestellt, bei der das Querträger-Konsolenteil, das Dachrahmen-Seitenteil sowie die Seiten-Außenhaut miteinander verbaut sind. Anschließend erfolgt ein Fügeprozess, bei dem das Querträger-Mittelteil in der Querträger-Konsolenteil eingelegt und anschließend verschweißt wird. Somit ist ein Toleranzausgleich in der Fahrzeugbreite an dieser Stelle gewährleistet. In einem folgenden Fügeschritt wird die Dach-Außenhaut mit ihrem Längsflansch sowie ihrem vorderen Querflansch auf den Längsflansch der Seiten-Außenhaut sowie auf das Querträgerprofil aufgesetzt und damit verschweißt.

Die vorstehend erläuterten und/oder in den Unteransprüchen wiedergegebenen vorteilhaften Aus- und/oder Weiterbildungen der Erfindung können - außer zum Beispiel in den Fällen eindeutiger Abhängigkeiten oder unvereinbarer Alternativen - einzeln oder aber auch in beliebiger Kombination miteinander zur Anwendung kommen.

Die Erfindung und ihre vorteilhaften Aus- und Weiterbildungen sowie deren Vorteile werden nachfolgend anhand von Zeichnungen näher erläutert.

Es zeigen:
- Figur 1: eine Vorderansicht eines Nutzfahrzeugs einer ersten Fahrzeugvariante mit vergrößerter Dachhöhe;
- Figur 2: eine vergrößerte Teilperspektivansicht eines Details aus der Figur 1;
- Figur 3: eine Schnittdarstellung entlang einer yz-Schnittebene aus der Figur 2;
- Figur 4: eine Explosionsdarstellung der in der Figur 2 gezeigten Blechteilanordnung, mittels der eine Fügefolge veranschaulicht ist;
- Figur 5: eine Ansicht entsprechend der Figur 1 eines Fahrzeugs einer zweiten Fahrzeugvariante mit reduzierter Dachhöhe; und

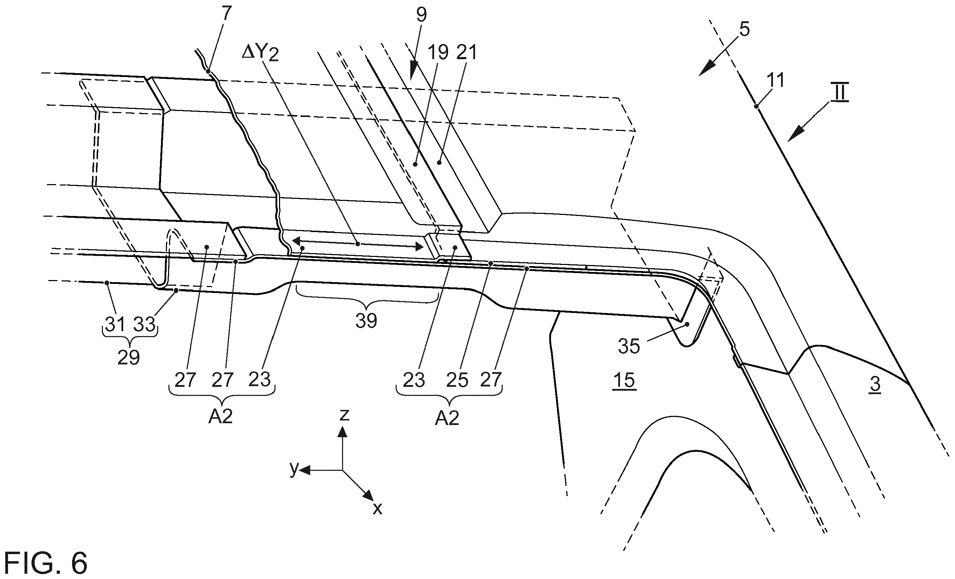

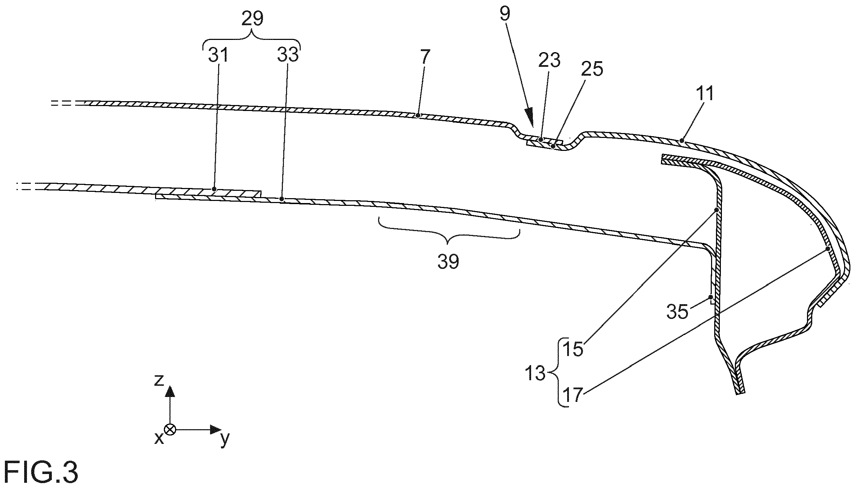

- Figur 6: eine Ansicht der zweiten Fahrzeugvariante entsprechend der Figur 2.

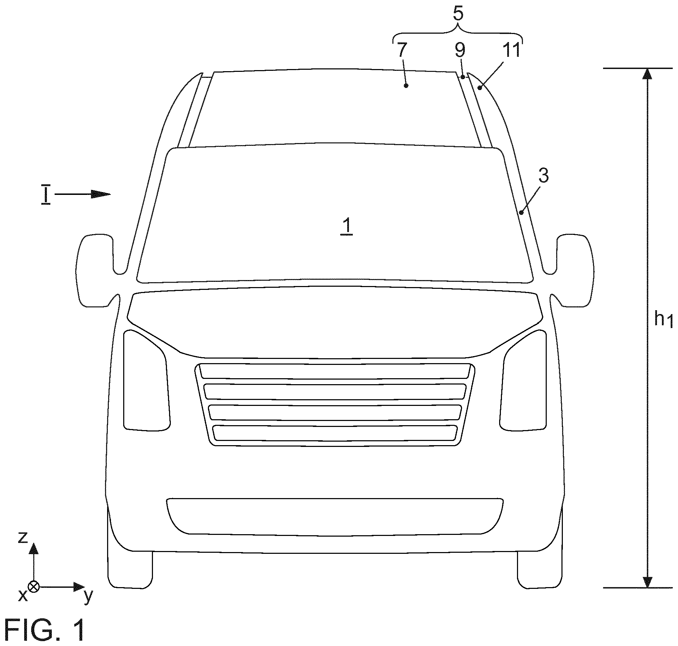

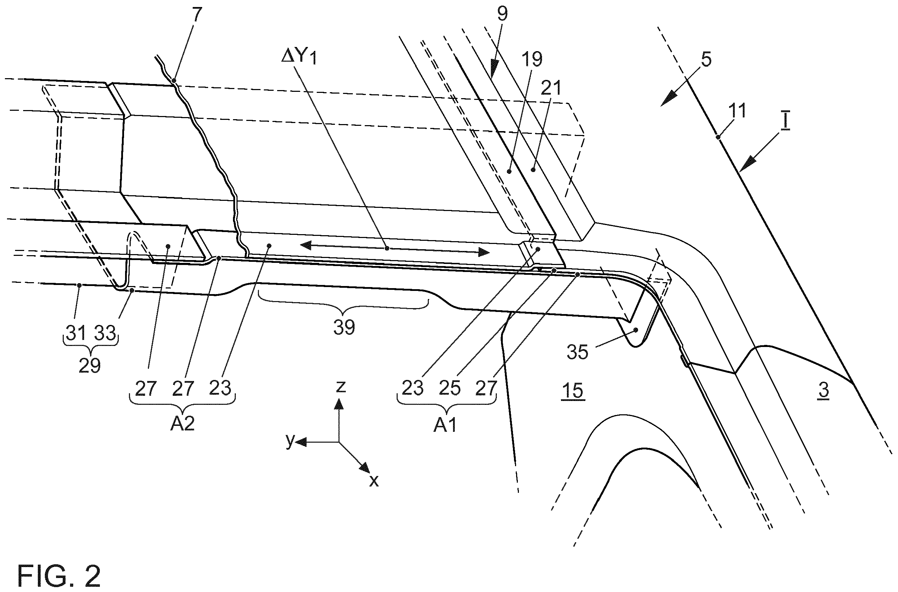

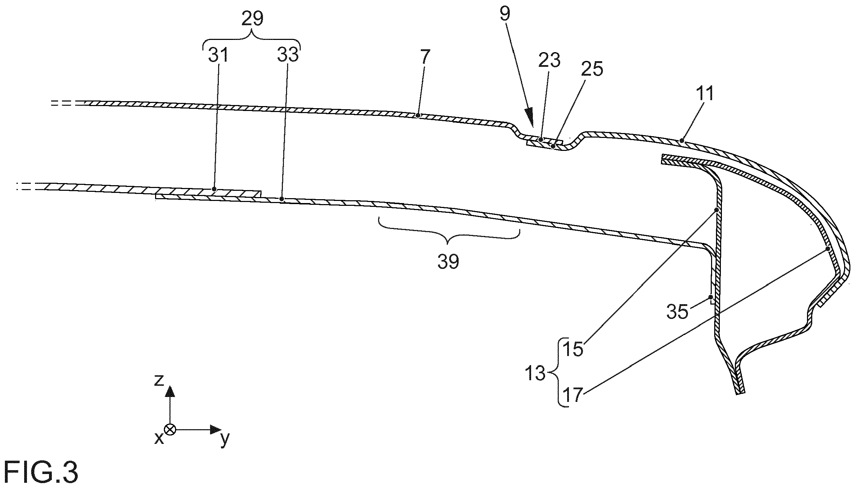

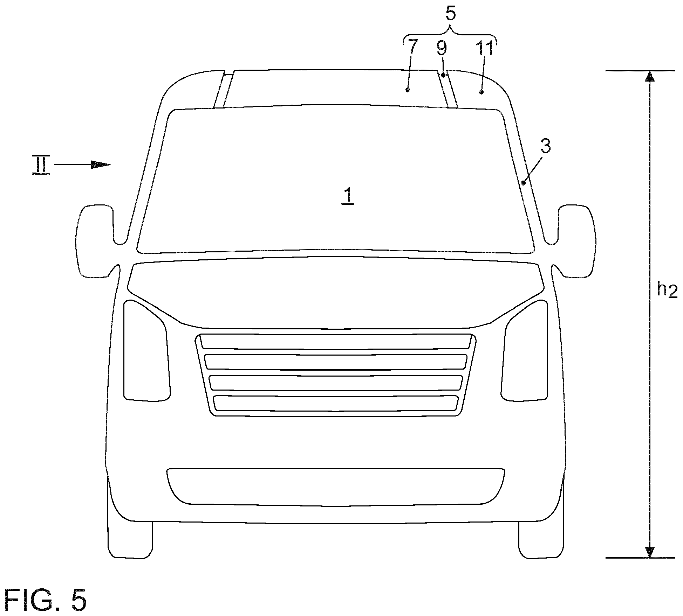

In der Figur 1 ist ein Nutzfahrzeug in einer ersten Fahrzeugvariante I gezeigt, die eine im Vergleich zur Dachhöhe h₂ einer zweiten Fahrzeugvariante II (Figur 5) vergrößerte Dachhöhe h₁ aufweist. Wie aus der Figur 1 hervorgeht, ist eine Frontscheibe 1 des Nutzfahrzeuges in der Fahrzeugquerrichtung y beidseitig durch jeweils ein A-Säulenelement 3 begrenzt. Das A-Säulenelement 3 geht in der Fahrzeuglängsrichtung x nach hinten in ein Fahrzeugdach 5 über, das eine Dach-Außenhaut 7 aufweist, das in der Fahrzeugquerrichtung y unter Bildung eines seitlichen Dachkanals 9 in eine Seiten-Außenhaut 11 übergeht. Die Seiten-Außenhaut 11 überzieht gemäß der Figur 3 ein Dachrahmen-Seitenteil 13, das aus einem inneren Profilteil 15 sowie einem äußeren schalenförmigen Profilteil 17 aufgebaut ist. Die Seiten-Außenhaut 11 sowie die Dach-Außenhaut 7 weisen jeweils Längsflansche 19, 21 auf, die in der Fahrzeughochrichtung z um eine Dachkanal-Tiefe zurückgesetzt sind und unter Bildung des Dachkanals 9 am Dachkanal-Grund miteinander punktverschweißt sind. Zudem weisen die Dach-Außenhaut 7 und die Seiten-Außenhaut 11 jeweils vordere Querflansche 23, 25 (Figur 2) auf, die einen gemeinsamen Frontscheibenflansch für die Frontscheibe 1 bilden. Die beiden Querflansche 23, 25 der Dach-Außenhaut 7 und der Seiten-Außenhaut 11 sind an einer ersten dreilagigen Anbindungsstelle A1 (Figur 2) zusammengefügt. An der ersten dreilagigen Anbindungsstelle A1 laufen zudem die Querflansche 23, 25 mit den Längsflanschen 19, 21 der Dach- und Seiten-Außenhaut 7, 11 zusammen.

Wie aus der Figur 2 oder 3 weiter hervorgeht, sind die Querflansche 23, 25 der Seiten- und Dach-Außenhaut 7, 11 unter Schweißverbindung auf einem Querträger-Flansch 27 eines Querträgerprofils 29 abgestützt. Das Querträgerprofil 29 ist in der Fahrzeugquerrichtung y nicht durchgängig einteilig ausgeführt, sondern vielmehr aus einem Querträger-Mittelteil 31 und einem an einer zweiten dreilagigen Anbindungsstelle A2 daran anschließenden Querträger-Konsole 33 ausgebildet. An der zweiten dreilagigen Anbindungsstelle A2 ist das Querträger-Mittelteil 31 und das Querträger-Konsolenteil 33 mit einem Überlappmaß zueinander überlappt. Das Überlappmaß ist so bemessen, dass eine doppelreihige Punktschweißverbindung ermöglicht ist. Im weiteren Verlauf in der Fahrzeugquerrichtung y nach fahrzeugaußen weist das Querträger-Konsolenteil 33 einen Anschlussflansch 35 auf, der am inneren Profilteil 15 des Dachrahmen-Seitenteils 13 angebunden ist.

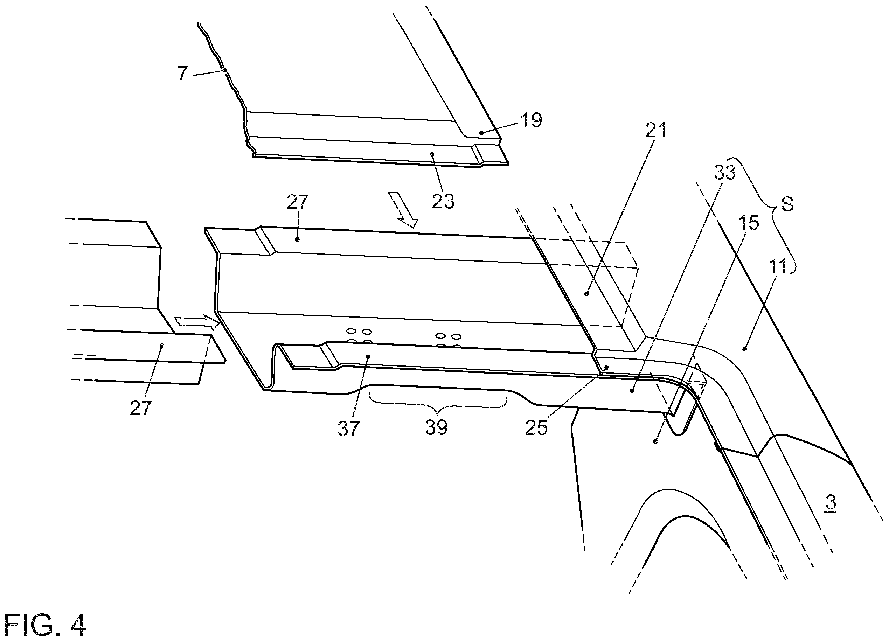

In der Figur 4 ist eine Fügefolge beim Zusammenbau der in der Figur 2 gezeigten Karosseriestruktur angedeutet: So wird zunächst eine Seiten-Baugruppe S bereitgestellt, bei der das Querträger-Konsolenteil 33, das Dachrahmen-Seitenteil 13 sowie die Seiten-Außenhaut 11 bereits miteinander verbaut sind. Anschließend erfolgt ein Fügeschritt, bei dem das Querträger-Mittelteil 31 in der Fahrzeugquerrichtung y in eine daran angepasste Anschlusskontur 37 des Querträger-Konsolenteils 33 eingelegt und damit verschweißt wird (an der zweiten dreilagigen Anbindungsstelle A2).

In einem folgenden Fügeschritt wird die Dach-Außenhaut 7 mit seinem Längsflansch 19 und seinem Querflansch 25 jeweils auf den Querträger-Flansch 27 und auf den Längsflansch 21 der Seiten-Außenhaut 11 aufgesetzt und damit verschweißt.

Wie aus dem obigen Fügevorgang hervorgeht, wirkt das Querträger-Konsolenteil 33 beim Fügen des Querträger-Mittelteils 31 als Querführung, mittels der gegebenenfalls Fertigungs- und Bauteiltoleranzen in der Fahrzeugquerrichtung y ausgeglichen werden können. Zudem ist die Baulänge des Querträger-Konsolenteils 33 derart bemessen, dass sowohl in der ersten Fahrzeugvariante I (Fig. 1) als auch in der zweiten Fahrzeugvariante II (Fig. 5) die erste dreilagige Anbindungsstelle A1 um einen Querversatz Δy₁, Δy₂ von der zweiten dreilagigen Anbindungsstelle A2 beabstandet ist.

In der ersten Anbindungsstelle A1 ist somit ein Dreilagenaufbau realisiert, bei dem die Querflansche 23, 25 der Dach-Außenhaut 7 und der Seiten-Außenhaut 11 sowie ein einlagiger Querträger-Flansch des Querträger-Konsolenteils 33 übereinander liegen. In gleicher Weise ist auch in der zweiten Anbindungsstelle A2 ein Dreilagenaufbau gewährleistet, bei dem die Querträger-Flansche 27 des Querträger-Mittelteils 31 und des Querträger-Konsolenteils 33 sowie der einlagige Querflansch 23 der Dach-Außenhaut 7 übereinanderliegen.

In der Figur 5 ist das Nutzfahrzeug in der zweiten Fahrzeugvariante II gezeigt, bei der im Vergleich zur Figur 1 die Dachhöhe h₂ reduziert ist. Zudem ist in der zweiten Fahrzeugvariante II die Dachkanal-Position nach fahrzeuginnen verlagert. Aufgrund der Verlagerung der Dachkanal-Position nach fahrzeuginnen wird auch die erste dreilagige Anbindungsstelle A1 zwischen den beiden Querflanschen 23, 25 der Dach- und der Seiten-Außenhaut 7, 11 nach fahrzeuginnen verlagert. Die zweite dreilagigen Anbindungsstelle A2 zwischen dem Querträger-Mittelteil 31 und dem Querträger-Konsolenteil 33 bleibt dagegen unverändert. Erfindungsgemäß ist die Baulänge des Querträger-Konsolenteils 33 in der Fahrzeugquerrichtung y derart groß bemessen, dass auch in der zweiten Fahrzeugvariante II die erste dreilagige Anbindungsstelle A1 noch um den Querversatz Δy₂ von der zweiten dreilagigen Anbindungsstelle A2 beabstandet ist. Zudem kann aufgrund der in der Fahrzeugquerrichtung y großen Baulänge eine zusätzliche Anbindungsstelle 39 für ein Sonnenblenden-Lager bereitgestellt werden.

## Patentansprüche

1. Karosseriestruktur für ein Nutzfahrzeug, mit einer Dach-Außenhaut (7) und einer Seiten-Außenhaut (11), die jeweils vordere Querflansche (23, 25) aufweisen, die einen gemeinsamen Frontscheibenflansch für eine Frontscheibe (1) bilden und an einer ersten dreilagigen Anbindungsstelle (A1), insbesondere Schweißstelle, überlappend in Verbindung sind und auf einem Querträger-Flansch (27) eines Querträgerprofils (29) abgestützt sind, wobei an der ersten dreilagigen Anbindungsstelle (A1) die Querflansche (23, 25) der Dach- und der Seiten-Außenhaut (7, 11) mit deren Längsflansche (19, 21) zusammenlaufen, die einen Dachkanal (9) bilden, und wobei das Querträgerprofil (29) aus einem Querträger-Mittelteil (31) und zumindest einem Querträger-Konsolenteil (33) aufgebaut ist, die an einer zweiten dreilagigen Anbindungsstelle (A2), insbesondere Schweißstelle, überlappend übereinanderliegen und mit einem der vorderen Querflansche (23, 25) der Dach- und der Seiten-Außenhaut (7, 11) verbunden sind, **dadurch gekennzeichnet, dass** sowohl in einer ersten Fahrzeugvariante (I) als auch in einer zweiten Fahrzeugvariante (II) die beiden dreilagigen Anbindungsstellen (A1, A2) zueinander um einen Querversatz (Δy₁, Δy₂) beabstandet sind.

2. Karosseriestruktur nach Anspruch 1, **dadurch gekennzeichnet, dass** sowohl in der ersten Fahrzeugvariante (I) als auch in der zweiten Fahrzeugvariante (II), mit Ausnahme der Dach-Außenhaut (7) und der Seiten-Außenhaut (11), Gleichteile verbaut sind.

3. Karosseriestruktur nach Anspruch 1 oder 2, **dadurch gekennzeichnet, dass** im Zusammenbauzustand das Querträger-Konsolenteil (33) unter Bildung eines oberen A-Säulenknotens an einem Dachrahmen-Seitenteil (13) angebunden ist, und dass das Dachrahmen-Seitenteil (13) in der Fahrzeuglängsrichtung (x) nach vorne in ein, die Frontscheibe (1) seitlich begrenzendes A-Säulenelement (3) übergeht.

4. Karosseriestruktur nach einem der vorhergehenden Ansprüche, **dadurch gekennzeichnet, dass** das Querträger-Konsolenteil (33) zusätzliche Anbindungsstellen (39) für ein Sonnenblenden-Lager aufweist.

5. Karosseriestruktur nach einem der vorhergehenden Ansprüche, **dadurch gekennzeichnet, dass** die Baulänge des Querträger-Konsolenteils (33) in der Fahrzeugquerrichtung (y) derart bemessen ist, dass sowohl in der ersten als auch zweiten Fahrzeugvariante (I, II) die erste dreilagige Anbindungsstelle (A1) um den Querversatz (Δy₁, Δy₂) von der zweiten dreilagigen Anbindungsstelle (A2) beabstandet sind.

6. Karosseriestruktur nach einem der vorhergehenden Ansprüche, **dadurch gekennzeichnet, dass** die Querflansche (23, 25) der Dach-Außenhaut (7) und der Seiten-Außenhaut (11) in Schweißverbindung, insbesondere Punktschweißverbindung, mit dem Querträger-Flansch (27) sind.

7. Karosseriestruktur nach einem der vorhergehenden Ansprüche, **dadurch gekennzeichnet, dass** an der ersten dreilagigen Anbindungsstelle (A1) ein Dreilagenaufbau realisiert ist, bei dem die Querflansche (23, 25) der Dach-Außenhaut (7) und der Seiten-Außenhaut (11) und der einlagige Querträger-Flansch (27) des Querträger-Konsolenteils (33) übereinanderliegen.

8. Karosseriestruktur nach einem der vorhergehenden Ansprüche, **dadurch gekennzeichnet, dass** an der zweiten Anbindungsstelle (A2) ein Dreilagenaufbau realisiert ist, bei dem die Querträger-Flansche (27) des Querträger-Mittelteils (31) und des Querträger-Konsolenteils (33) sowie der einlagige Querflansch (2) der Dach-Außenhaut (7) übereinanderliegen.

9. Fahrzeuggruppe mit zumindest einem Fahrzeug einer ersten Fahrzeugausstattung (I) und einem Fahrzeug einer zweiten Fahrzeugausstattung (II), die jeweils eine Karosseriestruktur nach einem der vorhergehenden Ansprüche aufweist.

10. Verfahren zur Herstellung von Fahrzeugen in einer ersten Fahrzeugausstattung (I) und in einer zweiten Fahrzeugausstattung (II), deren Karosseriestruktur jeweils gemäß einem der Ansprüche 1 bis 8 ausgebildet wird.

## Claims

1. A body structure for a utility vehicle, having a roof outer skin (7) and a side outer skin (11), which in each case have front transverse flanges (23, 25), which form a common windshield flange for a windshield (1) and are connected in an overlapping manner at a first three-layer connection point (A1), in particular, a welding point and are supported on a cross-member flange (27) of a cross-member profile (29), wherein at the first three-layer connection point (A1) the transverse flanges (23, 25) of the roof- and side outer skin (7, 11) converge with their longitudinal flanges (19, 21), which form a roof channel (9), and wherein the cross-member profile (29) is constructed from a cross-member center part (31) and at least one cross-member console part (33), which lie one above the other in an overlapping manner at a second three-layer connection point (A2), in particular, a welding point and are connected with one of the front transverse flanges (23, 25) of the roof- and the side outer skin (7, 11), **characterized in that** both in a first vehicle variant (I) as well as in a second vehicle variant (II) the two three-layer connection points (A1, A2) are spaced apart from one another by a transverse offset (Δy₁, Δy₂).

2. A body structure according to Claim 1, **characterized in that** both in the first vehicle variant (I) as well as in the second vehicle variant (II), identical parts are installed with the exception of the roof outer skin (7) and the side outer skin (11).

3. A body structure according to Claim 1 or 2, **characterized in that** in the assembled state the cross-member console part (33) so as to form an upper A-column node is connected to a roof frame side part (13), and that the roof frame side part (13) in the vehicle longitudinal direction (x) merges forward into an A-column element (3) limiting the windshield (1) laterally.

4. A body structure according to any one of the preceding claims, **characterized in that** the cross-member console part (33) has additional connection points (39) for a sun visor bearing.

5. A body structure according t any one of the preceding claims, **characterized in that** the overall length of the cross-member console part (33) in the vehicle transverse direction (y) is dimensioned in such a manner that both in the first as well as in the second vehicle variant (I, II) the first three-layer connection point (A1) is spaced apart by a transverse offset (Δy₁, Δy₂) from the second three-layer connection point (A2).

6. A body structure according to any one of the preceding claims, **characterized in that** the transverse flanges (23, 25) of the roof outer skin (7) and the side outer skin (11) are in a weld connection, in particular, a spot-welded connection, with the cross-member flange (27).

7. A body structure according to any one of the preceding claims, **characterized in that** at the first three-layer connection point (A1) a three-layer structure is realized, in which the transverse flanges (23, 25) of the roof outer skin (7) and the side outer skin (11) and the single-layer cross-member flange (27) of the cross-member console part (33) lie one above the other.

8. A body structure according to any one of the preceding claims, **characterized in that** at the second connection point (A2) a three-layer structure is realized, in which the cross-member flanges (27) of the cross-member center part (31) and of the cross-member console part (33) as well as the single-layer transverse flange (2) of the roof outer skin (7) lie one above the other.

9. A vehicle group with at least one vehicle of a first vehicle equipment (I) and a vehicle of a second vehicle equipment (II), which in each case has a body structure according to any one of the preceding claims.

10. A method for the production of vehicles in a first vehicle equipment (I) and in a second vehicle equipment (II), the body structure of which in each case is designed according to any one of Claims 1 to 8.

## Revendications

1. Structure de carrosserie pour un véhicule utilitaire, avec une enveloppe externe de toit (7) et une enveloppe externe latérale (11), qui comprennent chacune des brides transversales avant (23, 25), qui forment une bride de pare-brise commune pour un pare-brise (1) et qui sont reliées de façon à se chevaucher au niveau d'un premier point de liaison à triple couche (A1), plus particulièrement un point de soudure et qui sont appuyées sur une bride de traverse (27) d'un profilé de traverse (29), moyennant quoi, au niveau du premier point de liaison à triple couche (A1), la bride transversale (23, 25) de l'enveloppe externe du toit et de l'enveloppe externe latérale (7, 11) converge avec leurs brides transversales (19, 21), qui forment un canal de toit (9) et moyennant quoi le profilé de traverse (29) est constitué d'une partie centrale de traverse (31) et d'au moins une partie de console de traverse (33), qui se superposent, au niveau d'un deuxième point de liaison triple couche (A2), plus particulièrement d'un point de soudure, et sont reliées avec une des brides transversales avant (23, 25) de l'enveloppe externe du toit et de l'enveloppe externe latérale (7, 11), **caractérisée en ce que**, aussi bien dans la première variante de véhicule (I) que dans une deuxième variante de véhicule (II), les deux points de liaison (A1, A2) sont écartés entre eux d'un décalage transversal (Δy₁, Δy₂).

2. Structure de carrosserie selon la revendication 1, **caractérisée en ce que**, aussi bien dans la première variante de véhicule (I) que dans une deuxième variante de véhicule (II), à l'exception de l'enveloppe externe de toit (7) et de l'enveloppe externe latérale (11), des pièces identiques sont employées.

3. Structure de carrosserie selon la revendication 1 ou 2, **caractérisée en ce que**, dans l'état d'assemblage, la partie de console de traverse (33) est liée à une partie latérale de cadre de toit (13) en formant un noeud de colonne A supérieur et **en ce que** la partie latérale de cadre de toit (13) se transforme, dans la direction longitudinale du véhicule (x) vers l'avant, en un élément de colonne A (3) limitant latéralement le pare-brise (1).

4. Structure de carrosserie selon l'une des revendications précédentes, **caractérisée en ce que** la partie de console de traverse (33) comprend des points de liaison supplémentaires (39) pour un palier de pare-soleil.

5. Structure de carrosserie selon l'une des revendications précédentes, **caractérisée en ce que** la longueur de la partie de console de traverse (33) dans la direction transversale du véhicule (y) est dimensionnée de façon à ce que, aussi bien dans la première que dans la deuxième variante de véhicule (I, II), le premier point de liaison triple couche (A1) est écarté du deuxième point de liaison triple couche (A2) du décalage transversal (Δy₁, Δy₂).

6. Structure de carrosserie selon l'une des revendications précédentes, **caractérisée en ce que** la bride transversale (23, 25) de l'enveloppe externe de toit (7) et de l'enveloppe externe latérale (11) sont reliées par soudure, plus particulièrement à l'aide d'une liaison par soudure par points, avec la bride de traverse (27).

7. Structure de carrosserie selon l'une des revendications précédentes, **caractérisée en ce que**, au niveau du premier point de liaison triple couche (A1), est réalisée une structure à triple couche, dans laquelle la bride transversale (23, 25) de l'enveloppe externe de toit (7) et de l'enveloppe externe latérale (11) et la bride de traverse monocouche (27) de la partie de console de traverse (33) se superposent.

8. Structure de carrosserie selon l'une des revendications précédentes, **caractérisée en ce que**, au niveau du deuxième point de liaison (A2), est réalisée une structure à triple couche, dans laquelle la bride de traverse (27) de la partie centrale de traverse (31) et de la partie de console de traverse (33) ainsi que la bride transversale monocouche (2) de l'enveloppe externe de toit (7) se superposent.

9. Groupe de véhicules avec au moins un véhicule muni d'un premier équipement de véhicule (I) et un véhicule muni d'un deuxième équipement de véhicule (II), qui présentent chacun une structure de carrosserie selon l'une des revendications précédentes.

10. Procédé de fabrication de véhicules dans un premier équipement de véhicule (I) et dans un deuxième équipement de véhicule (II), dont chacune des structures de carrosserie est conçue selon l'une des revendications 1 à 8.
